Europäisches Patentamt

European Patent Office

Office européen des brevets

(11) Veröffentlichungsnummer: **0 447 951 A1**

# EUROPÄISCHE PATENTANMELDUNG

(21) Anmeldenummer: **91103891.7**

(22) Anmeldetag: **14.03.91**

(51) Int. Cl.5: **B62K 19/22**

(30) Priorität: **23.03.90 AT 692/90**

(43) Veröffentlichungstag der Anmeldung:
**25.09.91 Patentblatt 91/39**

(84) Benannte Vertragsstaaten:
**BE CH DE ES FR GB IT LI NL SE**

(71) Anmelder: **Austria Metall Aktiengesellschaft**

**A-5282 Braunau am Inn(AT)**

(72) Erfinder: **Braun, Adolf**
**Mozartstrasse 32**
**A-5280 Braunau/Inn(AT)**
Erfinder: **Üblacker, Peter**
**Schilfgasse 4**
**A-5111 Bürmoos(AT)**

(74) Vertreter: **WILHELMS, KILIAN & PARTNER**
**Patentanwälte et al**
**Eduard-Schmid-Strasse 2**
**W-8000 München 90(DE)**

(54) **Verbindung zwischen Rahmen und Knoten von Rohrrahmen.**

(57) Verbindung zwischen Rahmen und Knoten von Rohrrahmen, insbesondere Fahrradrahmen, wobei der Knoten (3) einen Ansatz (2) aufweist, der in das Rohr (1) ragt und zwischen innerer Rohrwand und Knotenansatz ein umlaufender, mit Kleber gefüllter Spalt (4) vorhanden ist, der beidseits von Zonen mit Preßsitz zwischen Rohr und Knotenansatz begrenzt ist, wobei die am Rohrende befindliche Preßpassungsfläche (5) einen größeren Durchmesser, als die am Knotenansatzende befindliche aufweist.

fig. 1

Die Erfindung bezieht sich auf eine Verbindung zwischen Rahmen und Knoten von Rohrrahmen, insbesondere Fahrradrahmen, wobei der Knoten einen Ansatz aufweist, der in das Rohr ragt und zwischen innerer Rohrwand und Knotenansatz ein umlaufender, mit Kleber gefüllter Spalt vorhanden ist, der beidseits von Zonen mit Preßsitz zwischen Rohr und Knotenansatz begrenzt ist.

Es sind solche Verbindungen bekannt, wie beispielsweise in der Europäischen Patentanmeldung 0 323 543 beschrieben. Diese haben aber den Nachteil, daß ein Bestreichen beider zu verbindender Flächen mit Kleber nicht sinnvoll ist, da beim Aufschieben der Teile der Kleber durch die erste Passung am Knotenansatzende von der Rohrinnenwand wieder abgestreift wird und somit keine vollständige Ausnützung der Kleberfestigkeit möglich ist. Es müssen daher spezielle Kleber verwendet werden, die lediglich einseitig eingestrichen werden müssen oder es wird eine Bohrung im Bereich der Klebestelle an einer der zu verbindenden Teile angeordnet, durch die der Kleber nach aufeinanderschieben der beiden Teile in ihre zu fixierende Lage eingebracht wird. Diese Bauweise, die auch in der oben angeführten Patentanmeldung beschrieben wird, ist nur aufwendig herzustellen, da in eine zylindrische Fläche eine Bohrung angebracht werden muß und dies einen zusätzlichen technischen Aufwand darstellt.

Erfindungsgemäß werden diese Nachteile dadurch behoben, daß die am Rohrende befindliche Preßsitzfläche einen größeren Durchmesser, als die am Knotenansatzende befindliche aufweist.

Dadurch ist es möglich, beide Seiten der zu verbindenden Flächen der Teile mit Kleber einzustreichen und aufeinander zu schieben, ohne den Kleber abzustreifen. Dies ist dadurch möglich, da die Preßpassungsfläche des Knotenansatzendes so gewählt ist, daß das Berühren der beiden Flächen in diesem Bereich beim Aufschieben vermieden wird. Zusätzlich wird der Kleber beim Aufschieben verdichtet, da über die Schiebelänge bei der das Rohrende über ihre kooperierende Passungsfläche gleitet, die zweite Passungsfläche, die über das Knotenansatzende gleitet, das Volumen des Klebers reduziert und ihn somit komprimiert. Dadurch wird eine gute Füllung des Klebespaltes erzielt und seine maximale Klebefähigkeit ausgenützt. Durch Anordnung von zwei Paßsitzen zu Beginn und Ende der Klebestelle ist die Verbindung während der Aushärtezeit des Klebers gut fixiert und benötigt keine weiteren Hilfsmittel zur Fixierung.

Mit dieser Verbindung sind aber nicht nur Fahrradrahmen, sondern auch Überrollbügel in Kraftfahrzeugen oder auch für Sitz- und Tragegestelle herstellbar. Die benutzten Rohrquerschnitte müssen nicht kreisförmig sein, sondern können auch elliptisch oder eckig ausgeführt sein.

Es ist erfindungsgemäß möglich, daß das Rohr im Bereich des am Knotenansatzende befindlichen Preßsitzes eine umlaufende, den Rohrrinnendurchmesser verringernde Sicke aufweist, der Durchmesser des Knotenansatzendes im Bereich des Spaltes und des Preßsitzes am Knotenansatzende gleich groß ist und das Rohr im zwischen dem Knotenansatzende befindlichen Preßsitz und Rohrende eine umlaufende Durchmesseraufweitung besitzt.

Auf diese Art sind sehr einfache Passungsflächen für das Rohr herstellbar, wobei im Bereich der Passungsfläche das Rohr eine hohe Elastizität besitzt und somit eine einfache Tolerierung für die Preßpassung ermöglicht. Je nach benötigter Gesamtfestigkeit und optisch gewünschtem Erscheinungsbild der Verbindung wird entweder das Rohr aufgeweitet oder gesickt.

Es ist erfindungsgemäß günstig, daß die Fläche des Knotenansatzes unter dem Rohrende einen umlaufenden Hinterschnitt aufweist.

Durch diese zusätzliche Maßnahme wird ein Rückfedern des Rohrendes hinter dem Paßsitz erzielt, wodurch eine zusätzliche mechanische Sicherung während des Aushärtens des Klebers gewährleistet ist und durch das zusätzliche Verkleben des überschüssigen Materials an dieser Stelle eine Dichtungswirkung erzielt wird.

Die Verbindung kann so ausgebildet sein, daß die Preßpassungsfläche am Knotenansatz im Bereich des Rohrendes durch Nuten unterbrochen ist. Diese Nuten können z.B. längs oder nach einer Schraubenlinie verlaufen. Zweckmässigerweise haben diese Nuten in etwa die Tiefe des Klebespaltes und stellen somit eine Vergrößerung der Klebefläche dar. Durch diese Ausführung kann die Klebefläche vergrößert werden, wobei die erwähnten Vorteile der Preßpassung erhalten bleiben.

Es ist vorteilhaft, bei der Herstellung einer solchen Verbindung so vorzugehen, daß das Rohr aufgeweitet oder umlaufend gesickt wird, darauf der überdrehte Knotenansatz und die Rohrinnenwand an den miteinander kooperierenden Flächen mit Kleber eingestrichen werden und danach das Rohr über den Knotenansatz geschoben wird.

Dieses Verfahren vermeidet eine spanabhebende Bearbeitung des Rohres, wodurch die Fertigung der Verbindung einfach und preisgünstig wird.

Es ist weiters günstig, daß die Aufweitung oder Sickung des Rohres durch Magnetumformen erfolgt, wobei ein Kalibrierkörper in oder über den zu verformenden Teil des Rohres geschoben wird, wodurch eine außergewöhnlich präzise Umformung des Rohres möglich ist und mit sehr enger Streuung der Maßgenauigkeit zu rechnen ist.

Die Erfindung wird anhand der nachstehenden Zeichnungen beschrieben. Es zeigen:

Fig. 1

eine erfindungsgemäße Verbindung, bei der das Rohr im Bereich des Knotenansatzendes gesickt ist.

Fig. 2

eine erfindungsgemäße Verbindung, bei der das Rohr im Bereich über der Klebestelle und der Preßpassung im Bereich ihres Endes aufgeweitet ist.

Fig. 3

das Sicken eines Rohres mit eingelegten Kalibrierkörper.

Fig. 4

das Aufweiten des Rohres durch Einschieben einer Magnetspule und außenliegendem Kalibrierring.

Fig. 5 und Fig. 6

eine erfindungsgemäße Verbindung mit durch Nuten unterbrochener Preßpassungsfläche am Knotenansatz im Bereich des Rohrendes in zwei unterschiedlichen Ausführungen.

Das Rohr 1 ist über dem Ansatz 2 des Knotens 3 angeordnet. Der umlaufende Klebespalt 4 ist beidseitig von Preßpassungsflächen 5, 6 begrenzt. Die Preßpassungsfläche 5 am Rohrende weist einen größeren Durchmesser auf, als die Preßpassungsfläche 6 und der übrige Teil des Ansatzes 2. Dadurch kann das Rohr 1 mit Kleber bestrichen, über den Ansatz 2 geschoben werden, ohne dabei durch Streifen der Passungsfläche 6, diesen wieder abzuwischen.

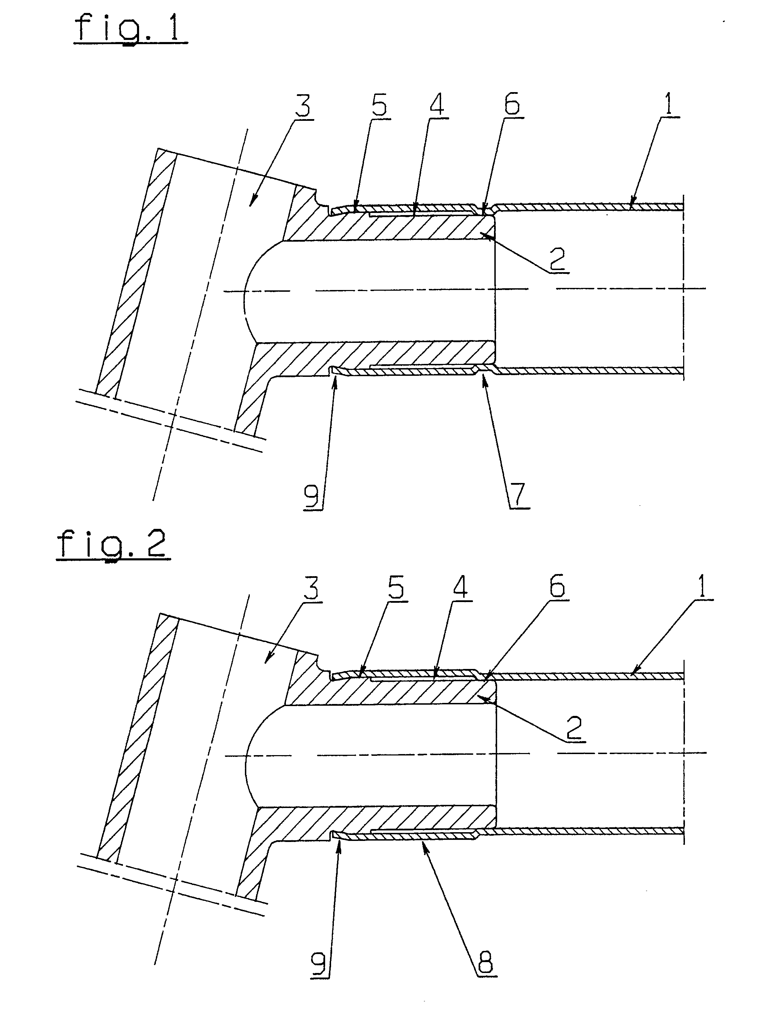

In der Fig. 1 ist das Rohr 1 im Bereich über der Passungsfläche 6 mit einer umlaufenden Sicke 7 versehen, wodurch die Preßpassung hergestellt ist.

In der Darstellung der Fig. 2 ist eine Verbindung erkennbar, bei der das 1 Rohr von der Passungsfläche 6 an zu seinem Ende hin eine Aufweitung 8 besitzt. Dadurch wird der Klebespalt 4 und die Passungsfläche 5 hergestellt. Im Bereich des Rohrendes ist am Ansatz 2 ein umlaufender Hinterschnitt 9 vorhanden, in dem das durch die Passungsfläche 5 des Ansatzes 2 aufgeweitete Rohr 1 radial hineinfedert und somit eine zusätzliche Fixierung des Rohres 1 am Knoten 3 erzeugt.

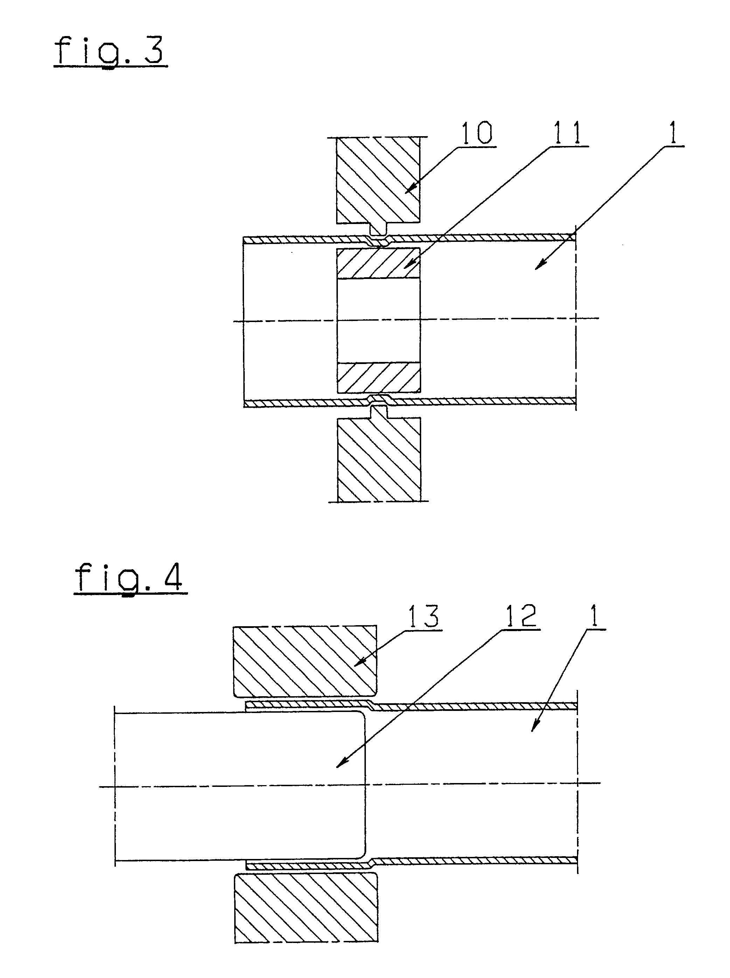

Fig. 3 zeigt die Herstellung der umlaufenden Sicke 7 durch Magnetumformen, wobei der Feldumformer 10 um das Rohr 1 angeordnet ist und der Kalibrierkörper 11 im Rohr 1 im Bereich, der zu sicken ist, befindet.

Fig. 4 zeigt eine Anordnung zum Rohraufweiten, bei der die Spule 12 im Rohr 1 angebracht ist und ein ringförmiger Kalibrierkörper 13 um den aufzuweitenden Bereich des Rohres 1 liegt.

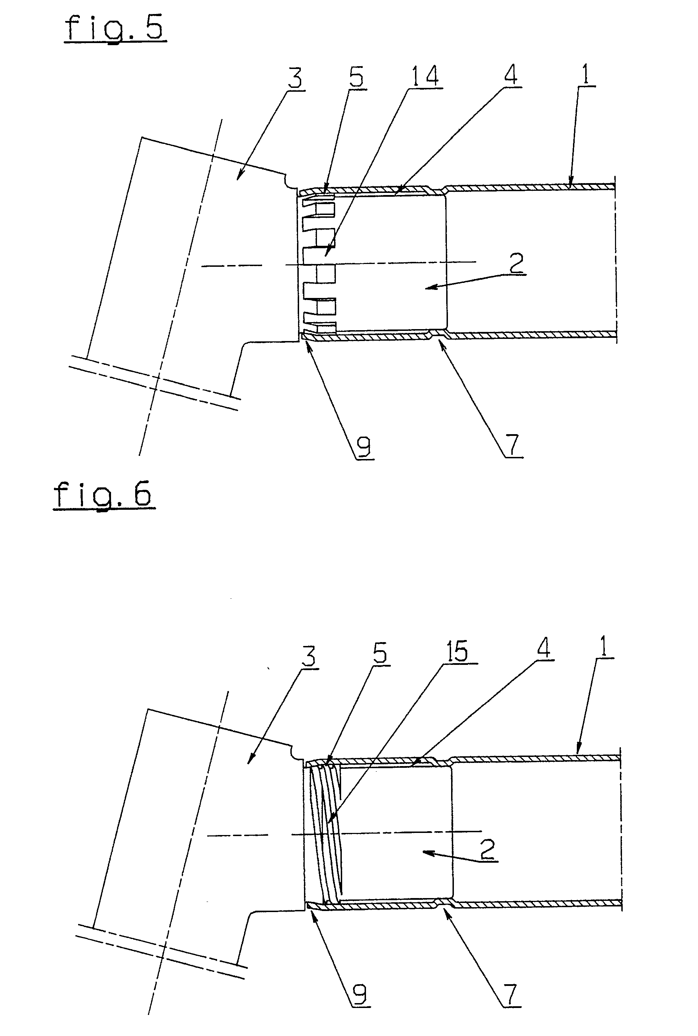

Fig. 5 und Fig. 6 zeigen eine Ausführung der Verbindung mit durch Nuten 14 bzw. 15 unterbrochener Preßpassungsfläche 5 am Knotenansatz 2 im Bereich des Rohrendes.

**Patentansprüche**

1. Verbindung zwischen Rahmen und Knoten von Rohrrahmen, insbesondere Fahrradrahmen, wobei der Knoten einen Ansatz aufweist, der in das Rohr ragt und zwischen innerer Rohrwand und Knotenansatz ein umlaufender, mit Kleber gefüllter Spalt vorhanden ist, der beidseits von Zonen mit Preßsitz zwischen Rohr und Knotenansatz begrenzt ist, dadurch gekennzeichnet, daß die am Rohrende befindliche Preßpassungsfläche (5) einen größeren Durchmesser, als die am Knotenansatzende befindliche aufweist.

2. Verbindung nach Anspruch 1, dadurch gekennzeichnet, daß das Rohr (1) im Bereich des am Knotenansatzende befindliche Preßpassungsfläche (6) eine umlaufende, den Rohrinnendurchmesser verringernde Sicke (7) aufweist.

3. Verbindung nach Anspruch 2, dadurch gekennzeichnet, daß der Durchmesser des Knotenansatzendes im Bereich des Klebespaltes (4) und der Preßpassungsfläche (5) am Knotenansatzende gleich groß ist.

4. Verbindung nach Anspruch 1, dadurch gekennzeichnet, daß das Rohr (1) in der zwischen dem Knotenansatzende befindlichen Preßpassungsfläche (5) und Rohrende eine umlaufende Durchmesseraufweitung besitzt.

5. Verbindung nach einem der vorhergehenden Ansprüche 1 bis 4, dadurch gekennzeichnet, daß die Passungsfläche (5) des Knotenansatzes unter dem Rohrende einen umlaufenden Hinterschnitt (9) aufweist.

6. Verbindung nach einem der Ansprüche 1 bis 5, dadurch gekennzeichnet, daß die Preßpassungsfläche 5 am Knotenansatz (2) im Bereich des Rohrendes durch Nuten (14, 15) unterbrochen ist.

7. Verfahren zur Herstellung einer erfindungsgemäßen Verbindung nach einem der Ansprüche 1 bis 5, dadurch gekennzeichnet, daß das Rohr (1) aufgeweitet oder umlaufend gesickt wird, darauf der überdrehte Knotenansatz und die Rohrinnenwand an den miteinander kooperierenden Passungsflächen (6) mit Kleber eingestrichen werden und danach das Rohr (1) über den Knotenansatz geschoben wird.

8. Verfahren nach Anspruch 7 zur Herstellung einer Verbindung nach Anspruch 1 bis 6, dadurch gekennzeichnet, daß die Aufweitung (8) der Sickung (7) des Rohres (1) durch Magnetumformen erfolgt, wobei ein Kalibrierkörper (11) in oder über dem zu verformenden Teil des Rohres (1) geschoben wird.

<u>fig.1</u>

<u>fig.2</u>

EP 0 447 951 A1

## fig.3

## fig.4

fig.5

fig.6

# EUROPÄISCHER RECHERCHENBERICHT

Nummer der Anmeldung

## EP 91 10 3891

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | US-A-4 900 049 (I.TSENG)<br>* Spalte 3, Zeilen 1 - 52; Figuren 1-5, 7, 8 *<br>– – – | 1,3,4,7 | B 62 K 19/22 |
| A | DE-C-8 026 80 (W.ALBERT)<br>* das ganze Dokument *<br>– – – | 1 | |
| A | FR-A-2 254 238 (C.MASSON)<br>* das ganze Dokument *<br>– – – – – | 1,6 | |

|  | RECHERCHIERTE SACHGEBIETE (Int. Cl.5) |
|---|---|
| | B 62 K<br>F 16 L |

Der vorliegende Recherchenbericht wurde für alle Patentansprüche erstellt

| Recherchenort | Abschlußdatum der Recherche | Prüfer |
|---|---|---|
| Den Haag | 05 Juli 91 | CZAJKOWSKI A.R. |